# EUROPEAN PATENT APPLICATION

(11) **EP 2 505 301 A1**
(43) Date of publication of application: **03.10.2012**
(21) Application number: 10832973.1
(22) Date of filing: 04.10.2010
(51) Int. Cl.: B23Q 1/72

(54) **BALANCER DEVICE FOR MACHINE TOOLS**

(30) Priority: 26.11.2009 JP 2009268607
(71) Applicant: Pascal Engineering Corporation, Itami-shi Hyogo 664-8502 (JP)
(72) Inventor: KITAURA Ichiro, Itami-shi Hyogo 664-8502 (JP)
(74) Representative: Roberts, Mark Peter
(86) International application number: PCT/JP2010/067377
(87) International publication number: WO 2011/065126

(57) **Abstract**

A gas spring (1) for a balancer device is provided with a cylinder body (12), a gas containing chamber (17) within the cylinder body (12) into which compressed gas is charged, and a rod member (14) extending outwards from the cylinder body (12) and receiving the pressure of gas in the gas containing chamber (17) and movable forwards and backwards with respect to the cylinder body (12); further there are provided with a sleeve member (13) fitted rotatably in a gas-tight manner in a sleeve installation hole (12c) formed in the rod side end wall (12a) of the cylinder body (12), and fitted in a gas-tight manner on the rod member (14) so that it can rotate thereon and can slide relative to the rod member (14) in the length direction; and a rotation restriction mechanism (15) that restricts the rod member (14) so as not to rotate and a rotational drive means (16) for rotationally driving the sleeve member (13).

## Description

### TECHNICAL FIELD

The present invention relates to a balancer device for a machine tool, and in particular relates to one that is adapted to reduce the frictional force acting from a seal member that seals in a gas-tight manner against a rod member of a gas spring that supports the weight of a main spindle head, and that is moreover adapted to reduce the load on a vertical drive means that drives the main spindle head in the vertical direction.

### BACKGROUND TECHNOLOGY

In order to alleviate the load on a vertical drive means that drives upwards and downwards a main spindle head that is fitted to a column of a machine tool so as to be movable up and down, in practice, a balancer device has been provided with which it is arranged to support a part or all of the weight of the main spindle head by a gas spring. For example, with the main spindle balancer for a machine tool described in Patent Document #1, a vertically oriented pull type gas spring is fitted in an inverted attitude at the upper end portion of a column of a vertical type machine tool, and the main spindle head is fixed to the lower end of a rod member thereof.

The gas spring is provided with a cylinder body, a rod member, and compressed gas that is charged into the interior of the cylinder body. With this type of gas spring, during operation of the machine tool: in the stationary state the main spindle head is kept in the state of being pulled and biased upwards; when the main spindle head is driven downwards by an upwards/downwards drive mechanism of the machine tool, the rod member is extended outwards from the cylinder body of the gas spring; and, when the main spindle head is driven to be raised, the rod member is retracted inwards with respect to the cylinder body. On the other hand, when a push type gas spring is employed as a main spindle balancer for a machine tool, the gas spring is fitted to the main spindle head in an inverted attitude, and the lower end of a rod member of the gas spring is supported on a base menber.

Patent Document #1: WO2007/099632

### DISCLOSURE OF THE INVENTION

### PROBLEMS TO BE SOLVED BY THE INVENTION

With the main spindle balancer of Patent Document #1, a rod guide member is fixed to the rod side end wall of the cylinder body and a rod passage hole is formed in the rod guide member, and the rod member is passed through the rod passage hole in a gas-tight manner with a seal member, so that it can slide freely therein. Since normally the pressure of the compressed gas charged in the gas spring is an extremely high pressure such as around 7 to 10 MPa and it is easy for the compressed gas to leak through any minute gap, accordingly the seal member is fitted over the rod member rather closely, so that it becomes gas-tight. For this reason, a high static frictional force and a high kinetic frictional force act between the rod member and the seal member.

When the rod member shifts forwards or backwards relative to the cylinder body during the operation of ascent and descent of the main spindle head, when the rod member starts to shift forwards or backwards in the axial direction from the stationary state, a large static frictional force acts between the rod member and the seal member, and, after the shifting of the rod member has started, a kinetic frictional force acts between the rod member and the seal member. Due to this, when the static frictional force acts before the start of shifting, wear and tear of the rod member or the seal member take place easily so that the durability is decreased, and also the load on the vertical drive means that drives the main spindle head upwards and downwards becomes large. Moreover when machining processing is started, and the kinetic frictional force is caused after the start of shifting, the value of the kinetic frictional force also cannot be ignored, since the speed of relative shifting of the rod member relative to the seal member is comparatively small.

Moreover if, during machining processing, shifting by the vertical drive means to raise or to lower the main spindle head is frequently repeated and stopped, then a kinetic frictional force acts during the shifting of the main spindle head, while a large static frictional force acts when shifting of the main spindle head is started from the stopped state. Since in this way the magnitude of the frictional force caused on the main spindle head is not constant, accordingly the error in the position control of the main spindle head becomes great, and the accuracy of machining processing is reduced. For example, if a workpiece is to be machined into the shape of a circular arc, then, due to errors in the position control of the main spindle head, the track of a tool installed to the main spindle head deviates undesirably from its predetermined circular arcuate track, and errors such as so-called stick motion error occur.

The object of the present invention is to provide a balancer device for a machine tool that, during shifting forwards and backwards of a rod member of a gas spring for supporting a main spindle head with respect to a cylinder thereof, is capable of remarkably reducing the frictional force acting between the rod member and the seal member, thus enhancing the accuracy of machining processing.

### MEANS TO SOLVE THE PROBLEMS

The balancer device for a machine tool according to the present invention comprises a gas spring that supports at least a portion of the weight of a main spindle head fitted to a column of the machine tool so as to be movable up and down; wherein the gas spring comprises a cylinder body, a gas containing chamber formed within the cylinder body and containing compressed gas and a rod member extending to outside from the cylinder body and receiving a gas pressure in the gas containing chamber, and movable forwards and backwards relative to the cylinder body;
and further comprises: a sleeve installation hole formed in a rod side end wall of the cylinder body; a sleeve member that is fitted into the sleeve installation hole rotatably in a gas-tight manner, and that is fitted rotatably in a gas-tight manner on the rod member via a seal member, so as to be slidable relative to the rod member in a length direction thereof; a rotation restriction mechanism that restricts the rod member so as not to rotate around an axis thereof; and a rotational drive means for rotationally driving the sleeve member around the axis.

### ADVANTAGES OF THE INVENTION

According to the balancer device for a machine tool of the present invention, since there is provided with, in the sleeve installation hole formed in the rod side end wall of the cylinder body, the sleeve member that is fitted into the sleeve installation hole rotatably in a gas-tight manner, and that is fitted rotatably in a gas-tight manner on the rod member via the seal member, and so as to be slidable relative to the rod member in a length direction thereof, and there are provided with the rotation restriction mechanism that restricts the rod member so as not to rotate around an axis thereof and the rotational drive means for rotationally driving the sleeve member around the axis. Accordingly, by driving always the sleeve member rotationally by the rotational drive means, even though the rod member is in the stationary state with respect to its axial direction, still it is possible to cause relative movement between the rod member and the seal member around the axis. Since, for this reason, the stationary state between the rod member and the seal member does not occur, accordingly the force that acts between the rod member and the seal member when the rod member starts to move forwards or backwards relative to the cylinder body is not static frictional force, but is kinetic frictional force that is around 1/10 of the static frictional force, so that it is possible to reduce the starting frictional force when forwards or backwards shifting of the rod member starts.

Moreover since, after machining processing by the machine tool has started and forwards and backwards shifting of the rod member has started, the relative shifting of the sleeve member with respect to the rod member is not only in the axial direction but is also relative rotational shifting around the axis of the rod member, accordingly it is possible to make stable the magnitude of the kinetic frictional force that acts at the sliding portion between the rod member and the seal member after forwards and backwards shifting has started. As a result, it is possible to reduce wear of the rod member and the seal member, and it is possible to reduce the load on the vertical drive means that drives the main spindle head upwards and downwards, so that it is possible to enhance the durability of the rod member and of the seal member.

Furthermore since, when the rod member shifts forwards and backwards with respect to the cylinder body in the state in which the sleeve member is rotating around its axis, a kinetic frictional force that is around 1/10 of the static frictional force acts between the rod member and the seal member, accordingly, during machining processing, even if shifting and stopping as the main spindle head rises or lowers is repeated frequently, still it is possible to keep the magnitude of the frictional force during shifting of the main spindle head in the axial direction and the magnitude of the frictional force when shifting starts from the stopped state approximately constant, so that errors in the position control of the main spindle head are reduced, and it becomes possible reliably to enhance the accuracy of the machining processing.

In addition to the structure described above, it would also be acceptable, as appropriate, to employ structures of the following types:
(1) The gas spring may be provided in an inverted attitude, so that the rod member extends downwards from the cylinder body that is fixed to the main spindle head, and there may be provided with: a seal member that seals in a gas-tight manner between the rod member and the sleeve member; a plurality of radial bearings and a seal member for sealing in a gas-tight manner which are provided between the sleeve member and the rod side end wall; and a thrust bearing that receives a thrust force acting on the sleeve member. Due to this, it is possible to support the weight of the main spindle head while ensuring the freedom for raising and lowering the main spindle head, and it is possible to reduce the load on the rotational drive means by alleviating the rotational resistance that acts on the sleeve member, and also to prevent leakage of compressed gas within the cylinder body to the exterior.
(2) The rotational drive means may include a driven gear formed integrally with a lower end portion of the sleeve member, an intermediate gear meshed with the driven gear, a drive gear meshed with the intermediate gear, and an electric motor having a speed reduction device that rotationally drives the drive gear. Due to this, it is possible to rotate the sleeve member with a simple construction easily.
(3) The rotational drive means may include a worm wheel formed integrally with a lower end portion of the sleeve member, a worm gear meshed with the worm wheel, and an electric motor that rotationally drives the worm gear. Due to this, it is possible to rotate the sleeve member with a simple construction easily.
(4) In a balancer device for a machine tool, comprising a gas spring that supports at least a portion of the weight of a main spindle head fitted to a column of the machine tool so as to be movable up and down: the gas spring may comprise a cylinder body, a gas containing chamber formed within the cylinder body and containing compressed gas, and a rod member extending to outside from the cylinder body and receiving the gas pressure in the gas containing chamber, and movable forwards and backwards relative to the cylinder body; and may comprise: a rotation support mechanism that rotatably supports the cylinder body with respect to the main spindle head; a rotation restriction mechanism that restricts the rod member so as not to rotate around an axis thereof; and a rotational drive means for rotationally driving the cylinder body around the axis
(5) There may be provided with a thrust bearing that receives a thrust force acting on the cylinder body. Due to this, it is possible to reduce the load on the rotational drive means.
(6) The rotational drive means may comprise a driven gear provided at an upper end portion of the cylinder body, a drive gear meshed with the driven gear, and an electric motor having a speed reduction device that rotationally drives the drive gear. Due to this, it is possible to rotate the cylinder body with a simple construction easily.

### BRIEF DESCRIPTION OF THE DRAWINGS

Fig. 1 is a side view side view of a horizontal type machine tool incorporating a balancer device according to a first embodiment;
Fig. 2 is a vertically sectional view of a gas spring;
Fig. 3 is an enlarged sectional view of an essential portion of the gas spring;
Fig. 4 is a horizontally sectional view of a rotational drive means;
Fig. 5 is a side view of a balancer device according to a second embodiment;
Fig. 6 is a vertically sectional view of a gas spring;
Fig. 7 is an enlarged sectional view of a principal portion of the gas spring;
Fig. 8 is a sectional view along VIII-VIII line of Fig. 5;
Fig. 9 is a side view of a balancer device according to a third embodiment;
Fig. 10 is a vertically sectional view of a gas spring; and
Fig. 11 is a plan view of a rotational drive means.

### DESCRIPTION OF NUMERALS

- G:: compressed nitrogen gas
- 1:: machine tool
- 3:: column
- 5:: main spindle head
- 10, 10A, 10B:: balancer devices
- 11, 46:: gas springs
- 12, 47:: cylinder body
- 12a:: rod side end wall
- 12c:: sleeve installation hole
- 13, 41:: sleeve members
- 14, 53:: rod members
- 15, 49:: rotation restriction mechanisms
- 16, 40, 50:: rotational drive means
- 17, 51:: gas containing chamber
- 31:: driven gear
- 32:: intermediate gear
- 33:: drive gear
- 34:: electric motor
- 42:: worm wheel
- 43:: worm gear
- 44:: electric motor
- 48:: rotation support mechanism
- 65:: driven gear
- 66:: drive gear
- 67:: electric motor

### BEST MODE FOR IMPLEMENTING THE INVENTION

In the following, the best mode for implementating the present invention will be explained on the basis of embodiments.

### EMBODIMENT 1

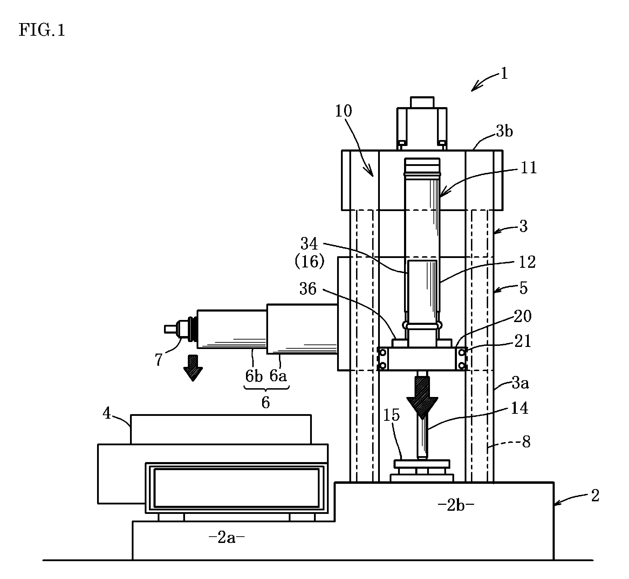

As shown in Fig. 1, a horizontal type machine tool comprises a base bed 2, a column 3, a table 4, a main spindle head 5, a quill 6 fitted to this main spindle head 5, and a main spindle 7 fitted to the quill 6 so as to rotate freely.

The base bed 2 comprises a front base bed portion 2a and a rear base bed portion 2b whose height is greater, and the column 3 is erected on the rear base bed portion 2b. The column 3 comprises four post members 3a and a top link member 3b. The table 4 is provided on the front base bed portion 2a so as to shift freely in the left and right direction (the X axis direction, i.e. the direction perpendicular to the drawing paper in Fig. 1), and is guided in the X axis direction by an X axis guide mechanism (not shown in the figures). An X axis ball screw mechanism (not shown in the figures) is provided on the front base bed portion 2a for driving the table 4 in the X axis direction. This X axis ball screw mechanism comprises a ball screw shaft rotatably provided to the front base bed portion 2a, a ball screw nut fixed to the table 4 and screwingly engaged to the ball screw shaft, and an X axis servo motor (not shown in the figures) that drives the ball screw shaft. It should be understood that the mechanism that guides the table 4 described above and shifts it in the X axis direction is the same as in a per se known horizontal type machine tool.

The main spindle head is provided on the column 3 so that it can be raised and lowered along the vertical direction (i.e. the direction of the Y axis). The main spindle head 5 is disposed between the two post members 3a on the left side and the two post members 3a on the right side, and is guided by a Y axis guide mechanism (not shown in the figures) so as to shift freely in the vertical direction. The Y axis guide mechanism comprises four guide rails 8 each of which is provided on inner side of one of the four post members 3a, and eight guide blocks that are fixed to the main spindle head 5 and that are engaged with the four guide rails 8.

A Y axis ball screw mechanism (not shown in the figures) for driving the main spindle head 5 in the vertical direction is provided to the rear base bed portion 2b. This Y axis ball screw mechanism comprises a ball screw shaft (not shown in the figures) that is rotatably attached to the top link member 3b of the column 3 and to the rear base bed portion 2b, a ball screw nut that is linked to the main spindle head 5 and is screwingly engaged with the ball screw shaft, and a Y axis servo motor (not shown in the figures) that drives the ball screw shaft to rotate. It should be understood that the mechanism that guides the main spindle head 5 described above and drives it to shift in the Y axis direction is the same as in a per se known horizontal type machine tool.

The quill 6 is provided on the main spindle head 5 in a horizontal attitude directing in the forward and backward direction, and is provided so as to shift freely in the forward and backward direction. The quill 6 comprises a first quill 6a of large diameter and a second quill 6b of smaller diameter than the first quill 6a that can be retracted to within the first quill 6a, and the main spindle 7 and a main shaft motor (not shown in the figures) that rotationally drives this main spindle 7 are installed to the second quill 6b.

A first Z axis guide mechanism (not shown in the figures) that guides the first quill 6a to shift freely horizontally in the forward and backward direction (i.e. in the Z axis direction) with respect to the main spindle head 5, a first Z axis ball screw mechanism (not shown in the figures) that drives the first quill 6a in the forward and backward direction with respect to the main spindle head 5, a second Z axis guide mechanism (not shown in the figures) that guides the second quill 6b to shift freely horizontally in the forward and backward direction (i.e. in the Z axis direction) with respect to the first quill 6a, and a second Z axis ball screw mechanism (not shown in the figures) that drives the second quill 6b in the forward and backward direction with respect to the main spindle head 5, are provided. The ball screw shaft of the first Z axis ball screw mechanism is driven by a first Z axis servo motor (not shown in the figures), and the ball screw shaft of the second Z axis ball screw mechanism is driven by a second Z axis servo motor (not shown in the figures).

The main spindle 7 is supported on the second quill 6b so as to rotate freely relative thereto, and a motor support member that supports the main spindle motor is guided by the first and second Z axis guide mechanisms in the forward and backward direction and is linked to a ball screw nut of the second Z axis ball screw mechanism. An output shaft of the main spindle motor is linked to the second quill 6b via a coupling. It should be understood that the mechanism that guides the first and second quills 6a and 6b described above in the Z axis direction and drives them in the Z axis direction is the same as in a per se known horizontal type machine tool for boring.

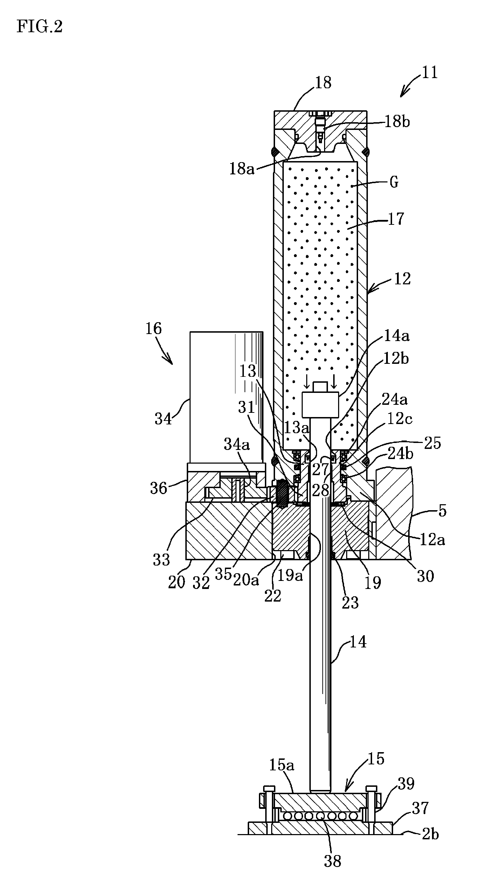

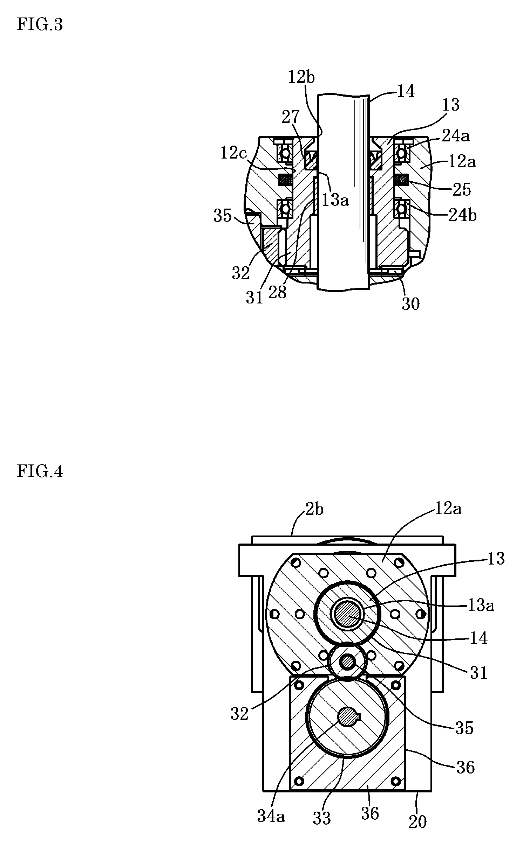

Next, a balancer device 10 will be explained on the basis of Figs. 1 through 4.
The balancer device 10 is a device that generates a biasing force so as to support the greater portion of the weight of the main spindle head 5. The balancer device 10 comprises a pair of gas springs 11 at left and right sides that support the main spindle head 5, a pair of rotation restriction mechanisms 15 that perform restriction respectively so that rod members 14 movable forwards and backwards with respect to cylinder bodies 12 do not rotate around the axes of the rod members 14, and a pair of rotational drive means 16 for rotationally driving sleeve members 13 respectively that will be described hereinafter around the axes of the rod members 14.

The pair of gas springs 11 are disposed in inverted vertical attitudes on both the left side and the right side of the main spindle head 5 at intermediate positions in the forward and backward direction, and are push type gas springs for alleviating the load on the Y axis servo motor as it drives the main spindle head 5 upwards and downwards, and the pair of gas springs 11 support the greater portion of the weight of the main spindle head 5. Each of the gas springs 11 comprises a cylinder body 12, a gas containing chamber 17 formed within the cylinder body 12 into which a compressed gas (for example compressed nitrogen gas G at 7 to 10 MPA) is charged, and a rod member 14 that passes through a rod side end wall 12a of the cylinder body 12 and extends downwards to the exterior of the cylinder body 12.

As the main spindle head 5 rises up, the length of the portion of the rod member 14 that projects into the gas containing chamber 17 decreases, so that the volume of the gas containing chamber 17 increases and the pressure of the compressed gas decreases. For example, when the position of the main spindle head 5 in the height direction is an intermediate position, the biasing forces generated by the pair of gas springs 11 on left and right sides may be set to be equal to the total weight of the main spindle head 5. However this is not to be considered as being limitative; it would also be acceptable for it to be possible for the greater portion of the weight of the main spindle head 5 to be supported by the pair of gas springs 11.

The rod member 14 extends downwards and passes through the rod side end wall 12a of the cylinder body 12 and a divided support member 19, and its lower end is contacted against the upper surface of a pad 15a of the rotation restriction mechanism 15. The rod member 14 receives the gas pressure of the compressed nitrogen gas G in the gas containing chamber 17 and is thereby biased downward, and the main spindle head 5 is biased upwards due to the reaction force. Along with the gas pressure of the nitrogen gas G being received at the upper end portion of the rod member 14 and a stopper member 14a fixed thereto, the stopper member 14a is provided in order to prevent the rod member 14 from coming out downwards. This stopper member 14a has a diameter that is larger than that of the rod passage hole 12b of the cylinder body 12, and that is smaller than the internal diameter of the gas containing chamber 17.

The cylinder body 12 has a head side end wall member 18 at its upper end portion, and a through hole 18a that is oriented vertically is formed in the head side end wall member 18, with a gas charging plug 18b having a check valve being installed in a gas-tight manner in the through hole 18a, so that it is possible to charge compressed nitrogen gas G into the gas containing chamber 17 from the gas charging plug 18b. The head side end wall member 18 is fixed to the main body barrel portion of the cylinder body 12 by a plurality of bolts.

The cylinder body 12 is fixed to the main spindle head 5 via a support member 20 and the divided support member 19. The support member 20 is made by forming a pair of flange portions integrally on a thick rectangular parallelepipedal block, and is fixed by four bolts 21 to the left and right side surfaces of the main spindle head 5 The divided support member 19 may, for example, be fitted by being pressed into a vertically oriented installation hole 20a in the support member 20.

A rod passage hole 19a through which the rod member 14 passes is formed in the divided support member 19. In the state in which the rod member 14 passes through the rod passage hole 19a, the lower end of the cylinder body 12 is contacted against the upper surface of the divided support member 19, and the divided support member 19 is fixed to the cylinder body 12 by a plurality of bolts 22. It should be understood that a dust seal 23 is installed at the lower end portion of the rod passage hole 19a.

The center portion of the rod side end wall 12a of the cylinder body 12 is divided as a sleeve member 13. The sleeve member 13 is fitted rotatably in a gas-tight manner into a vertically oriented cylindrical sleeve installation hole 12c that is formed in the rod side end wall 12a, and is fitted in a gas-tight manner on the rod member 14 so as to be rotatable, and also so as to be capable of sliding relative to the rod member 14 in its length direction.

A pair of upper and lower radial bearings 24a and 24b and an annular seal member 25 that seals between the sleeve member 13 and the rod side end wall 12a at an intermediate portion in the vertical direction between the radial bearings 24a and 24b are installed between the sleeve member 13 and the rod side end wall 12a (i.e. between the outer circumferential surface of the sleeve member 13 and the inner circumferential surface of the sleeve installation hole 12c).

The rod passage hole 13a is formed at an axially central portion of the sleeve member 13, with the rod member 14 being passed therethrough in a gas-tight state and being capable of sliding freely therein. An annular seal member 27 and a bush 28 that is positioned lower than the seal member 27 are installed between the rod member 14 and the sleeve member 13. And an annular thrust bearing 30 is provided between the lower end of the sleeve member 13 and the divided support member 19, and receives thrust force acting on the sleeve member 13.

Next, the rotational drive means 16 that rotationally drives the sleeve member 13 will be explained.
The rotational drive means 16 comprises a driven gear 31 formed integrally on the external circumference of the lower end portion of the sleeve member 13, an intermediate gear 32 meshed with the driven gear 31, a drive gear 33 meshed with the intermediate gear 32, and an electric motor 34 having a speed reduction device and that rotationally drives the drive gear 33. The rotational power of the output shaft 34a of the electric motor 34 is transmitted from the drive gear 33 to the sleeve member 13 via the intermediate gear 32 and the driven gear 31. It should be understood that the electric motor 34 may be built as a servo motor, or may be some other type of motor.

The two end portions of a rotation shaft 35 to which the intermediate gear 32 is fixed are rotationally supported in a rotational support hole in the divided support member 19 and in a rotational support hole in the cylinder body 12, so that it can rotate freely. The electric motor 34 having a peed reduction device is disposed in the neighborhood of the side of the gas spring 11 in an inverted attitude, and is fixed to the support member 20 via a gear holding member 36 that contains the drive gear 33.

Next, the rotation restriction mechanism 15 will be explained.
This rotation restriction mechanism 15 is a device for restricting the rod member 14 so that it does not rotate around its axis, while permitting the lower end portion of the rod member 14 to shift in the horizontal direction. The rotation restriction mechanism comprises a pad 15a against which the lower end of the rod member 14 contacts, a base plate 37 that is fixed to the rear base bed portion 2b, a plurality of steel balls 38 between the pad 15a and the base plate 37, four bolts 39 that connect the pad 15a and the base plate 37, and so on. Bolt holes formed in the pad 15a are several millimeters larger in diameter than the bolts 39, so that, while the pad 15a can shift in the horizontal direction by several millimeters, its rotation around the vertical axis is restricted so that it can almost not shift rotationally at all.

Since the rod member 14 is biased downwards with a strong force due to receiving the pressure of the compressed nitrogen gas G, accordingly the rod member 14 is contacted against the upper surface of the pad 15a in the state of being pressed thereagainst with a strong force. For this reason, due to the frictional force acting between the rod member and the contact surface of the pad 15a, the lower end portion of the rod member 14 is held integrally with the pad 15a so as to be shiftable in the horizontal direction, and moreover so that its rotation is restricted by the pad 15a.

It should be understood that the reason that shifting in the horizontal direction of the lower end portion of the rod member 14 is permitted is as follows.
The reason is in order to permit minute shifting of the lower end portion of the rod member 14 in the horizontal direction caused along with the operation of raising and lowering of the main spindle head, if due to some manufacturing error in the gas spring 11 the axis of the rod member 14 is tilted at a minute angle with respect to the axis of the cylinder body 12, or if due to some error in the assembly of the gas spring 11 to the main spindle head 5 the axis of the rod member 14 is tilted at a minute angle with respect to the vertical. If such minute shifting as described above is not permitted, then there is a fear that the sliding resistance acting between the cylinder body 12 and the rod member 14 may increase.

Next, the operation and the beneficial advantages of the balancer device 10 of the horizontal type machine tool 1 will be explained.
Due to the gas spring 11, while still ensuring the freedom for raising and lowering the main spindle head 5, it is possible greatly to alleviate the load on the Y axis servo motor for driving the main spindle head 5 upwards and downwards.

When the main spindle head 5 is driven downwards by the Y axis servo motor, since the cylinder body 12 of the gas spring 11 is also lowered integrally therewith, accordingly the rod member 14 is driven into the cylinder body 12 along the axial direction; and moreover, when the main spindle head 5 is driven upwards by the Y axis servo motor, since the cylinder body 12 of the gas spring 11 is also raised integrally therewith, accordingly the rod member 14 is retracted out from the cylinder body 12 along the axial direction.

With the balancer device 10, the electric motor 34 is always being driven during operation of the machine tool 1, and the sleeve member 13 is kept in a state of rotating around the axis of the rod member 14. Due to rotation of the sleeve member 13, the seal member 27 is also rotated integrally with the sleeve member 13. Due to this, even if the rod member 14 is in a stationary state in terms of its axial direction, still the rod member 14 and the seal member 27 are not in a mutually stationary state. Because of this, when, in the state in which the sleeve member 13 is always rotating, the rod member 14 that is in a stationary state in terms of the axial direction with respect to the cylinder body shifts forwards and backwards along the axial direction, there is no static frictional force at the sliding portion between the rod member 14 and the seal member 27, and a kinetic frictional force of around 1/10 the magnitude of the static frictional force acts between them, so that it is possible to reduce the starting frictional force that acts on the above described sliding portion. For this reason, it is possible to alleviate the load on the Y axis servo motor and to make the gas spring 11 more compact, and it is possible to reduce the wear on the rod member 14 and the seal member 27, so that it is possible to enhance the durability of these members.
Moreover, since the sleeve member 13 is rotating around the axis of the rod member 14, accordingly the direction of relative shifting between the rod member 14 and the seal member 27 becomes, not only the direction parallel to the rod member 14, but two directions, i.e. the direction parallel to the axis and the rotational direction around the axis, so that it is possible to stabilize the magnitude of the kinetic frictional force that acts on the sliding portion between the rod member 14 and the seal member 27.

Moreover, since the force that acts at the sliding portion between the rod member 14 and the seal member 27 is not a static frictional force, but rather is a kinetic frictional force that is around 1/10 of the magnitude of the static frictional force, accordingly even if, during machining processing, shifting to raise or to lower the main spindle head 5 along the vertical direction and stopping thereof are repeated frequently, still it is possible for the magnitude of the frictional force during shifting of the main spindle head 5 and the magnitude of the frictional force when starting shifting from the stopped state to be kept approximately constant, so that it is possible to reduce errors in the control of the position of the main spindle head 5, and it is possible reliably to enhance the accuracy of machining processing. It should be understood that while, in this embodiment, it is arranged always to drive the electric motor 34 during the operation of the machine tool 1 and thus to maintain the state in which the sleeve member 13 is rotating around the axis, it would also be acceptable to arrange to drive the electric motor 34 and to rotate the sleeve member 13 only when high precision of machining processing are required.

Since the lower end of the rod member 14 contacts against the pad 15a of the rotation restriction mechanism 15 in the state of being pressed thereagainst, and since, along with the rotation of the rod member 14 being restricted by the strong frictional force that acts at this contact surface that restricts its rotation via the pad 15a, also shifting of the lower end portion of the rod member 14 in the horizontal direction is permitted, accordingly it is possible to eliminate any negative influence due to error in the manufacture or error in the fitting of the gas spring 11.

Since the seal member 27 that seals in a gas-tight manner between the rod member 14 and the sleeve member 13, the plurality of radial bearings 24a and 24b that are provided between the sleeve member 13 and the rod side end wall 12a and the seal member 25 that seals them in a gas-tight manner, and the thrust bearing 30 that receives the thrust force acting on the sleeve member 13 are provided, accordingly it is possible to alleviate the load on the rotational drive means 16, and it is possible reliably to prevent leakage to the exterior of the compressed nitrogen gas G.

### EMBODIMENT 2

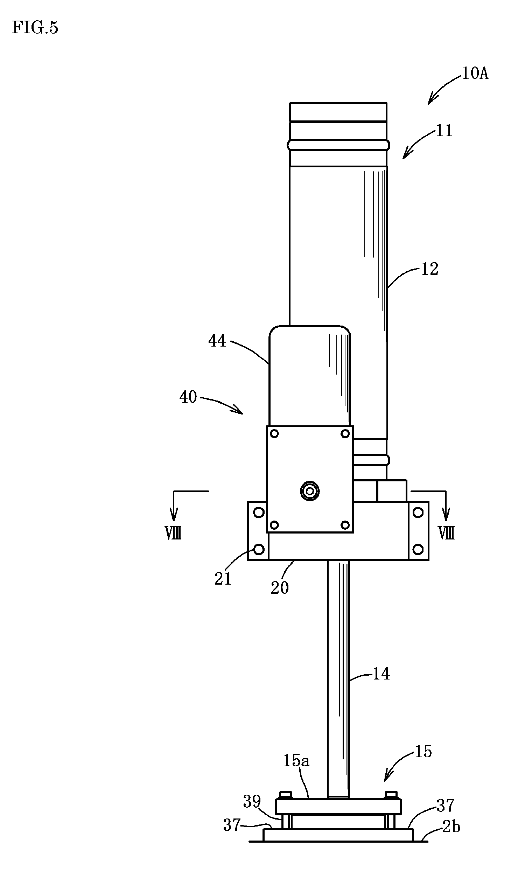

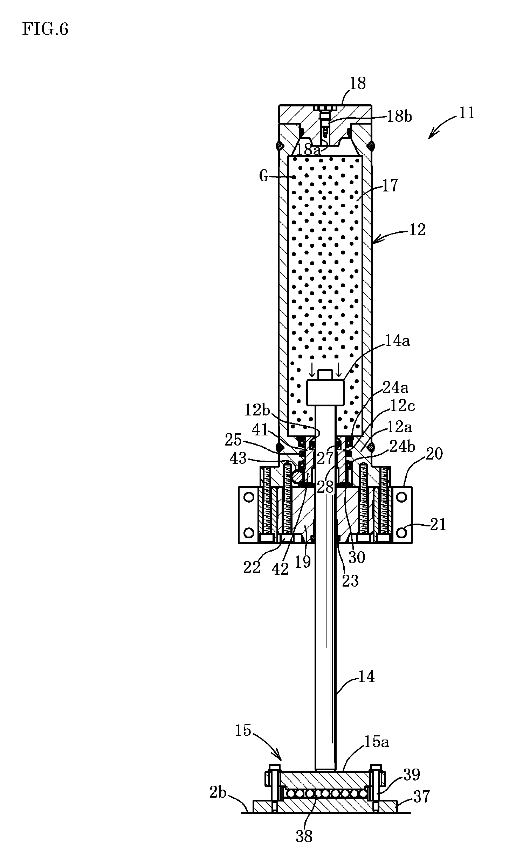

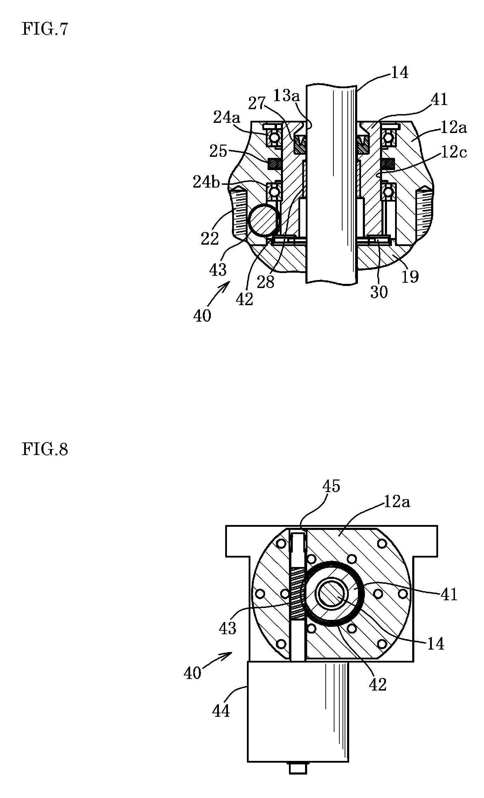

Next, a balancer device 10A of a second embodiment will be explained on the basis of Figs. 5 through 8.
However, the same reference symbols are appended to structural elements that are the same as ones in the first embodiment, and explanation thereof will be omitted, with only those structures that are different being explained. While this embodiment is an example in which the present invention is applied to a horizontal type machine tool in the same manner as in the first embodiment, the structure of the rotational drive means 40 is different from that of the first embodiment.

The rotational drive means 40 comprises a worm wheel 42 formed integrally on the external periphery of the lower end portion of the sleeve member 41, a worm gear 43 meshed with the worm wheel 42, and an electric motor 44 having a speed reduction device that rotationally drives this worm gear 43, so that the rotatory power of the output shaft of the electric motor 44 is transmitted to the sleeve member 41 via the worm gear 43.

The electric motor 44 is disposed in an inverted attitude at a position in the neighborhood of the gas spring 11 in the left or right side, and is fixed to the support member 20. The one end portion of the worm gear 43 is linked to the output shaft of the electric motor 44, and it is rotatably inserted into a gear passage hole 45 formed in the rod side end wall 12a of the cylinder body 12.

With this balancer device 10A, since the rotatory power of the output shaft of the electric motor 44 is transmitted from the worm gear 43 to the sleeve member 41 via the worm hole 42, accordingly the seal member 27 also rotates integrally with the sleeve member 41 due to the rotation of the sleeve member 41. Due to this, by always causing the electric motor 1 to rotate during the machining operation of the machine tool 1, it is possible to obtain similar operation and similar beneficial advantages to those of the first embodiment above. It should be understood that it would also be acceptable to arrange to rotationally operate the electric motor 44 and to rotate the sleeve member 41, only when high precision of mechaning processing is required.

### EMBODIMENT 3

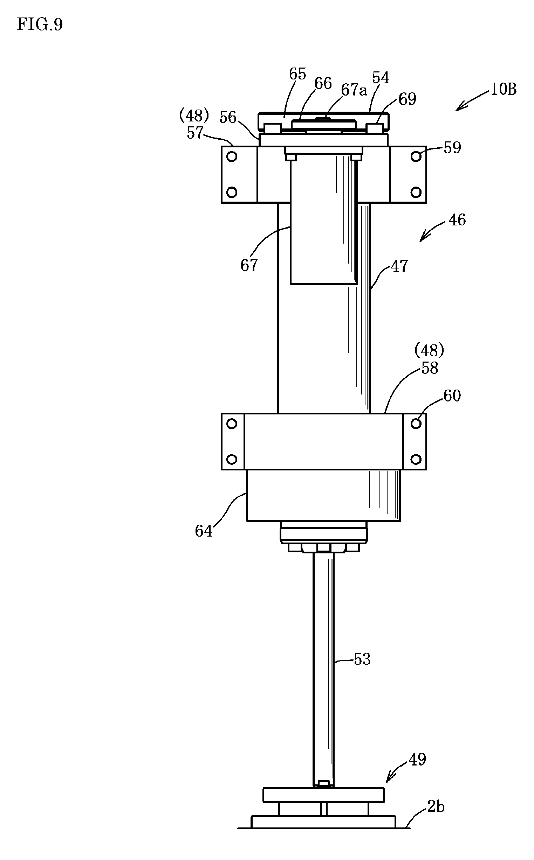

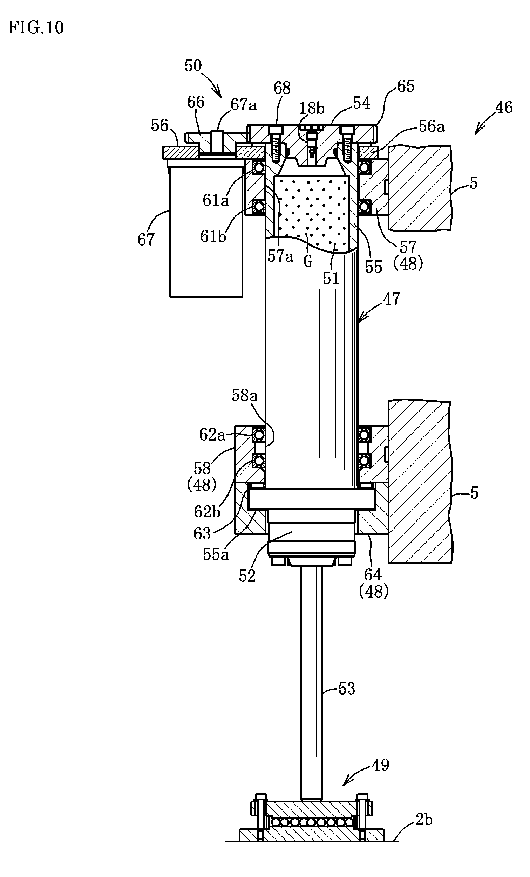

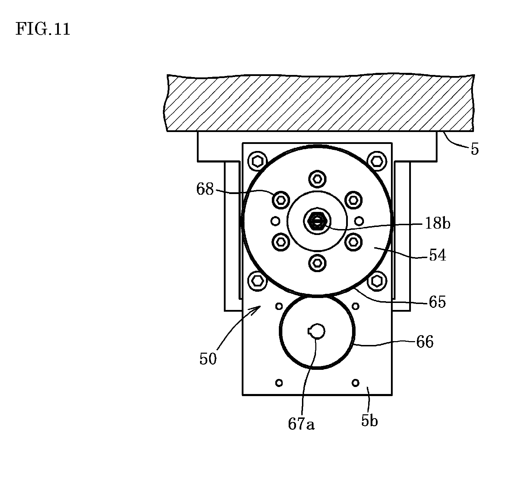

Next, a balancer device 10B of a third embodiment will be explained on the basis of Figs. 9 through 11.
However, the same reference symbols are appended to structural elements that are the same as ones in the first embodiment, and explanation thereof will be omitted, with only those structures that are different being explained. While this embodiment is an example in which the present invention is applied to a horizontal type machine tool in the same manner as in the first embodiment, the sleeve members 13 and 41 of the first and second embodiments are omitted, and it is arranged to rotate the cylinder body 47 of the gas spring 46.

As shown in Figs. 9 through 11, this balancer device 10Bcomprises a pair of gas springs 46 that support a main spindle head 5, a pair of rotation support mechanisms 48 that rotatably support respectively cylinder bodies 47 of the pair of gas springs 46 on the main spindle head 5, a pair of rotation restriction mechanisms 49 that restrict rod members 53 respectively so as not to rotate around their axes, and a pair of rotational drive means 50 for rotationally driving the cylinder bodies 47 around the axes respectively.

Each of the gas springs 46 comprises the cylinder body 47, a gas containing chamber 51 formed within the cylinder body 47 and into which a compressed gas (compressed nitrogen gas G) is charged, and a rod member 53 that extends to pass through a rod side end wall member 52 of the cylinder body 47.
The cylinder body 47 has a head side end wall 54 and a rod side end wall 52. The head side end wall 54 is fixed to a main body barrel portion 55 of the cylinder body 47 by six bolts 68. A rod passage hole through which the rod member 53 is inserted so as to slide freely in a gas-tight manner is formed in the rod side end wall 52, and the rod member 53 extends downwards through the rod passage hole, with the lower end portion of the rod member 53 being contacted against the upper surface of the rotation restriction mechanism 49.

A motor attachment plate 56 that extends in a horizontal direction corresponding to the upper end portion of the main body barrel portion 55 is formed on the cylinder body 47, and this motor attachment plate 56 is fixed by four bolts 69 to the upper surface of a support member 57 that will be described hereinafter. A flange portion 56a is formed on this motor attachment plate 56 and extends outwards to the region exterior to the main body barrel portion 55. And a flange portion 55a is formed on the lower end portion of the main body barrel portion 55 of the cylinder body 47, so as to extend outwards to the region exterior to the main body barrel portion 55.

The rotation support mechanism 48 comprises a support member 57 that rotatably supports the upper end portion of the main body barrel portion 55 of the cylinder body 47, a support member 58 that rotatably supports the lower end portion of the main body barrel portion 55 of the cylinder body 47, and a dropping prevention member 64. The support member 57 is fixed by four bolts 59 to the left or right side surface of the main spindle head 5, and the support member 58 is fixed by four bolts 60 to the left or right side surface of the main spindle head 5. The cylinder body 47 is disposed so as to pass through support apertures 57a and 58a in the support members 57 and 58. The cylinder body 47 is rotatably supported in the support member 57 via a pair of radial bearings 61a and 61b so as to rotate freely therein, and is also rotatably supported in the support member 58 via a pair of radial bearings 62a and 62b so as to rotate freely therein.

A thrust bearing 63 is installed between the flange portion 55a and the support member 58, and the thrust force from the compressed gas in the gas containing chamber 51 (the compressed nitrogen gas G) that operates on the cylinder body 47 in the upward direction is supported by the thrust bearing 63. The dropping prevention member 64 is disposed under the support member 58, and this dropping prevention member 64 is fixed by a plurality of bolts to the left or right side surface of the main spindle head 5. Due to the dropping prevention member 64, the flange portion 55a of the main barrel portion 55 of the cylinder body 47 can be received and stopped from falling.

The rotational drive means 50 comprises a driven gear 65 that is formed integrally with the upper end portion of the head side end wall member 54, a drive gear 66 meshed with the driven gear 65, and an electric motor 67 having a speed reduction device that rotationally drives the drive gear 66, and the cylinder body 47 is rotationally driven by the rotational power of the output shaft 67a of the electric motor 67. The rotation restriction mechanism 49, against which the lower end portion of the rod member 53 contacts, is the same as that in the first embodiment described above, and the rod member 53 is restricted so that it does not rotate around its own axis.

With this balancer device 10B, since the electric motor 67 is always rotationally driven during operation of the machine tool 1 and the cylinder body 47 is kept in the rotating state while the rotation of the rod member 53 is restricted, accordingly it is possible to obtain similar operation and beneficial advantages to those of the first embodiment. It should be understood that it would also be acceptable to arrange to rotationally operate the electric motor 67 and to rotate the cylinder body 47, only when high precision of mechaning processing is required.

While, in the above embodiment, a few of examples have been explained in which the present invention is applied to a horizontal type machine tool 1 for boring, of course the present invention could also be applied to various types of machine tool having a main spindle head that is driven upwards and downwards (also including a normal horizontal type machine tool or a vertical type machine tool). Moreover, without deviating from the present invention, a person skilled in the art could also implement various changes to these embodiments in additional ways.

### INDUSTRIAL APPLICABILITY

With the present invention, in a machine tool that has a main spindle head mounted on a column so as to be drivable vertically, it is possible to alleviate the load on a vertical drive means that drives the main spindle head upwards and downwards.

## Claims

1. A balancer device for a machine tool, comprising a gas spring that supports at least a portion of the weight of a main spindle head fitted to a column of the machine tool so as to be movable up and down; wherein
the gas spring comprises a cylinder body, a gas containing chamber formed within the cylinder body and containing compressed gas and a rod member extending to outside from the cylinder body and receiving a gas pressure in the gas containing chamber, and movable forwards and backwards relative to the cylinder body;
and further comprises:
a sleeve installation hole formed in a rod side end wall of the cylinder body;
a sleeve member that is fitted into the sleeve installation hole rotatably in a gas-tight manner, and that is fitted rotatably in a gas-tight manner on the rod member via a seal member, so as to be slidable relative to the rod member in a length direction thereof;
a rotation restriction mechanism that restricts the rod member so as not to rotate around an axis thereof; and
a rotational drive means for rotationally driving the sleeve member around the axis.

2. A balancer device for a machine tool according to claim 1; wherein
said gas spring is fitted in an inverted attitude, so that the rod member extends downwards from the cylinder body that is fixed to the main spindle head; and
there are provided with; a seal member that seals in a gas-tight manner between the rod member and the sleeve member; a plurality of radial bearings and a seal member for sealing in a gas-tight manner which are provided between the sleeve member and the rod side end wall; and a thrust bearing that receives a thrust force acting on the sleeve member.

3. A balancer device for a machine tool according to claim 2; wherein
the rotational drive means comprises a driven gear formed integrally with a lower end portion of the sleeve member, an intermediate gear meshed with the driven gear, a drive gear meshed with the intermediate gear, and an electric motor having a speed reduction device that rotationally drives the drive gear.

4. A balancer device for a machine tool according to claim 2; wherein
the rotational drive means comprises a worm wheel formed integrally with a lower end portion of the sleeve member, a worm gear meshed with the worm wheel, and an electric motor that rotationally drives the worm gear.

5. A balancer device for a machine tool, comprising a gas spring that supports at least a portion of the weight of a main spindle head fitted to a column of the machine tool so as to be movable up and down; wherein
the gas spring comprises a cylinder body, a gas containing chamber formed within the cylinder body and containing compressed gas and a rod member extending to outside from the cylinder body and receiving the gas pressure in the gas containing chamber, and movable forwards and backwards relative to the cylinder body;
and comprises:
a rotation support mechanism that rotatably supports the cylinder body with respect to the main spindle head;
a rotation restriction mechanism that restricts the rod member so as not to rotate around an axis thereof; and
a rotational drive means for rotationally driving the cylinder body around the axis.

6. A balancer device for a machine tool according to claim 5; wherein there is provided with a thrust bearing that receives a thrust force acting on the cylinder body.

7. A balancer device for a machine tool according to claim 5 or claim 6; wherein the rotational drive means comprises a driven gear provided at an upper end portion of the cylinder body, a drive gear meshed with the driven gear, and an electric motor having a speed reduction device that rotationally drives the drive gear.
